# EUROPÄISCHE PATENTSCHRIFT

(11) **EP 3 515 658 B1**
(45) Veröffentlichungstag und Bekanntmachung des Hinweises auf die Patenterteilung: **10.03.2021**
(21) Anmeldenummer: 17790735.9
(22) Anmeldetag: 18.10.2017
(51) Int. Cl.: B23P 21/00, E05B 17/00, E05C 9/00

(54) **MONTAGEVERFAHREN UND MONTAGEVORRICHTUNG**
ASSEMBLY METHOD AND ASSEMBLY DEVICE
PROCÉDÉ DE MONTAGE ET DISPOSITIF DE MONTAGE

(30) Priorität: 21.10.2016 DE 102016120104
(43) Veröffentlichungstag der Anmeldung: 31.07.2019
(73) Patentinhaber: MACO Technologie GmbH, 5020 Salzburg (AT)
(72) Erfinder: DOLZER, Felix, 5310 St. Lorenz (AT)
(74) Vertreter: Manitz Finsterwald Patent- und Rechtsanwaltspartnerschaft mbB
(86) Internationale Anmeldenummer: PCT/EP2017/076635
(87) Internationale Veröffentlichungsnummer: WO 2018/073318

(56) Entgegenhaltungen:
- EP-A1- 0 404 616
- EP-A1- 0 494 572
- EP-A2- 0 359 293
- FR-A1- 2 589 933
- FR-A1- 2 679 811
- US-A- 4 928 385

## Beschreibung

Die vorliegende Erfindung betrifft ein Verfahren sowie eine Montagevorrichtung jeweils zur Montage von Beschlaganordnungen, insbesondere von Beschlaganordnungen für Fenster, Türen, Möbel oder dergleichen. Ein Verfahren nach dem Oberbegriff des Anspruchs 1 sowie eine Montagevorrichtung nach dem Oberbegriff des Anspruchs 8 sind aus EP 0 404 616 A1 bekannt.

Derartige Beschlaganordnungen können beispielsweise Treibstangenbeschläge oder Scherenbeschläge für Fenster oder Türen sein und insbesondere zumindest ein Beschlagelement mit länglicher Form, etwa eine Treibstange, eine Stulpschiene und/oder ein oder mehrere sonstige schienenartige Elemente umfassen. Als weitere Beschlagelemente kann eine jeweilige Beschlaganordnung ferner verschiedene Getriebeelemente oder auch ein teilweise oder vollständig vormontiertes Getriebe, Zapfenelemente, z.B. an einer Treibstange vorzusehende Schließzapfen, und/oder Lager- bzw. Führungselemente, z.B. Zahnräder bzw. Zahnkästchen, zur Lagerung bzw. Führung jeweiliger Beschlagelemente umfassen. Andere Bespiele sind Beschlaganordnungen für Möbel, beispielsweise Gelenkanordnungen, die insbesondere Gelenkstangen umfassen können, oder Führungsanordnung, wie etwa Führungsschienen, z.B. für Schubladen oder dergleichen.

Die Montage einer jeweiligen Beschlaganordnung kann umfassen, dass mehrere solcher Beschlagelemente zueinander angeordnet, aneinander befestigt und/oder in sonstiger Weise in eine Wirkverbindung miteinander gebracht werden. Das kann ein Vernieten, Verschweißen, Verpressen, Verklemmen oder ähnliches umfassen. Dabei ist es auch denkbar, dass ein oder mehrere Beschlagelemente lediglich zwischenzeitlich, etwa für einen die Montage unterstützenden Zwischenschritt, an der zu montierenden Beschlaganordnung angeordnet, später aber davon wieder gelöst werden. Zudem können auch Montageschritte vorgesehen sein, bei denen Beschlagelemente der Beschlaganordnung bearbeitet, etwa verformt, gestanzt, geprägt, geschmiert, beschichtet und/oder ähnliches, werden. Ein Montieren im Sinne der Erfindung kann auch umfassen, dass lediglich eine derartige Bearbeitung eines jeweiligen Beschlagelements erfolgt, ohne dass dabei zwangsläufig mehrere Beschlagelemente in Wirkverbindung miteinander gebracht werden. Beispielsweise stellt auch eine Bearbeitung eines Beschlagelements durch eine Stanzmaschine eine Montage oder einen Montageschritt im Sinne der Erfindung dar.

Die Montage erfolgt vorzugsweise weitgehend automatisiert. Dazu können verschiedene Montagestationen vorgesehen sein, an denen sich jeweilige Vorrichtungen, unter anderem beispielsweise Roboter, befinden, um einen oder mehrere Montageschritte auszuführen. Dabei kann es, etwa aus Platzgründen, erforderlich sein, dass nicht alle Montageschritte an einer einzelnen Montagestation ausgeführt werden. Die Montage auf mehrere verteilt angeordnete Montagestationen zu verteilen, hat zudem den Vorteil, dass die Montage einer nachfolgenden Beschlaganordnung bereits beginnen kann, sobald die vorangehende Beschlaganordnung die erste Montagestation in Richtung einer zweiten Montagestation verlassen hat, also noch bevor die Montage der vorangehenden Beschlaganordnung abgeschlossen ist.

Ein solches Vorgehen setzt voraus, dass die noch unfertige Beschlaganordnung jeweils von Montagestation zu Montagestation befördert wird. Bei einem solchen Transport soll sich die Anordnung der bereits angeordneten Beschlagelemente in der Regel nicht verändern. Je nachdem, welche Montageschritte bereits erfolgt sind, können dabei Beschlagelemente zu transportieren sein, die zwar bereits in einer definierten Lage zueinander angeordnet wurden, aber voneinander beabstandet und (noch) unverbunden sind. Beispielsweise können an einer Montagestation Zapfenelemente in bestimmtem Abstand zueinander angeordnet werden, die erst an einer nachfolgenden Montagestation durch eine Treibstange, mit der sie später vernietet werden, miteinander verbunden werden.

Daher kann es für die Bewegung der unfertigen Beschlaganordnung zweckmäßig sein, ein starres Trägerelement vorzusehen, an dem die Beschlagelemente der Beschlaganordnung nach und nach angeordnet werden und das von Montagestation zu Montagestation transportiert wird. Typischerweise kann es sich dabei um eine starre Schiene oder Platte, etwa um eine Aluminiumschiene, handeln. Damit ein jeweiliges Beschlagelement an dem Trägerelement angeordnet werden kann und bei einer Bewegung von einer Montagestation zur nächsten seine Position, insbesondere seine relative Anordnung zu einem oder mehreren weiteren Beschlagelementen, auch zuverlässig beibehält, können an dem Trägerelement entsprechende Halterungen vorgesehen sein. Die Halterungen können insbesondere für das jeweilige zu haltende Beschlagelement spezifisch ausgebildet und an der jeweiligen für dieses Beschlagelement vorgesehenen Stelle an dem Trägerelement fest vorgesehen sein.

Dabei können die Halterungen für die jeweiligen Beschlagelemente in einer der zu montierenden Beschlaganordnung entsprechenden Anzahl und Lage unmittelbar in dem Trägerelement ausgebildet oder an dem Trägerelement stabil angeordnet sein. Das Trägerelement ist somit spezifisch für eine zu montierende Beschlaganordnung einer bestimmten Konfiguration ausgebildet.

Wenn aber vorgesehen ist, Beschlaganordnungen verschiedener Konfigurationen zu montieren, kann daher ein Umrüsten des jeweiligen Trägerelements erforderlich werden, was beispielsweise ein Entfernen von Halterungen, ein Anordnen anderer Halterungen, ein Austauschen von Halterungen und/oder ein Versetzen von Halterungen an dem Trägerelement umfassen kann. Beschlaganordnungen unterschiedlicher Konfiguration können sich beispielsweise hinsichtlich ihrer jeweiligen Länge, ihrer jeweiligen Formung, ihrer jeweiligen Funktion und/oder der jeweiligen Verteilung oder Lage verschiedener Beschlagelemente, wie z.B. des Getriebes und/oder jeweiliger Zapfen, unterscheiden. Da ein jeweiliges Trägerelement so etwas wie ein Referenzmaß für eine jeweilige Konfiguration darstellen kann, erfolgt ein Umrüsten eines Trägerelements vorzugsweise nur selten, etwa wenn die Fertigung von Beschlaganordnungen einer ersten Konfiguration vollständig abgeschlossen ist und erst anschließend Beschlaganordnungen einer zweiten Konfiguration gefertigt werden sollen. Zudem kann das Umrüsten, das typischerweise weitgehend manuell erfolgt, viel Zeit beanspruchen, so dass Totzeiten zwischen der Montage von Beschlaganordnungen einer ersten Konfiguration und der Montage von Beschlaganordnungen einer von der ersten Konfiguration verschiedenen zweiten Konfiguration entstehen.

Es ist eine Aufgabe der Erfindung, ein Verfahren und eine Montagevorrichtung zur Montage von Beschlaganordnungen zumindest einer ersten und einer davon verschiedenen zweiten Konfiguration bereitzustellen, das eine verbesserte Flexibilität und kurze Umrüstzeiten hinsichtlich jeweiliger Wechsel zwischen den verschiedenen Konfigurationen der zu montierenden Beschlaganordnungen bietet.

Die Aufgabe wird gelöst durch ein Verfahren mit den Merkmalen des Anspruchs 1 sowie durch eine Montagevorrichtung mit den Merkmalen des Anspruchs 8. Bevorzugte Ausführungsformen des Verfahrens bzw. der Montagevorrichtung ergeben sich aus den Unteransprüchen, der vorliegenden Beschreibung sowie den Zeichnungen.

Bei dem erfindungsgemäßen Verfahren ist insbesondere vorgesehen, dass eine Montagevorrichtung verwendet wird, die eine Laufbahn und mehrere an der Laufbahn beweglich angeordnete Läufer umfasst, wobei die Läufer jeweils zumindest eine Halterung zur vorübergehenden Anordnung eines oder mehrerer jeweiliger Beschlagelemente aufweisen und individuell zu einer Bewegung entlang der Laufbahn ansteuerbar sind, um mehrere entlang der Laufbahn vorgesehene Montagestationen zu durchlaufen. Grundsätzlich erfüllen die Läufer somit eine ähnliche Funktion wie das genannte Trägerelement, auf das daher verzichtet werden kann. Denn ein jeweiliger Läufer weist zumindest eine Halterung auf, die insbesondere spezifisch für zumindest ein jeweiliges Beschlagelement ausgebildet sein kann, und ist zwischen den Montagestationen bewegbar. Folglich können jeweilige an den Läufern angeordnete Beschlagelemente mittels der Läufer zwischen den Montagestationen transportiert werden.

Wesentlich ist dabei insbesondere, dass die Läufer zu einer jeweiligen Bewegung individuell ansteuerbar sind. Mit anderen Worten ist der Bewegungsablauf eines jeweiligen Läufers zumindest im Wesentlichen unabhängig von dem Bewegungsablauf eines jeweiligen anderen Läufers - jedenfalls solange die jeweiligen Läufer einander nicht im Wege stehen. Dabei kann die Laufbahn grundsätzlich auch mehrspurig ausgebildet sein, so dass verschiedene Läufer einander etwa überholen oder in entgegengesetzter Richtung passieren können. Verschiedene Läufer können insbesondere individuell zu Bewegungen mit unterschiedlichen Geschwindigkeiten oder Geschwindigkeitsverläufen und/oder in unterschiedliche Richtung ansteuerbar sein. Die Ansteuerung eines jeweiligen Läufers und somit der von dem jeweiligen Läufer vollzogene Bewegungsablauf können dabei vorab fest vorgegeben sein oder aber nach Art einer autonomen Regelung oder Steuerung bestimmt werden.

Eine derartige Montagevorrichtung ermöglicht folglich einen Transport jeweiliger Beschlagelemente entlang der Laufbahn zwischen den Montagestation in besonders flexibel anpassbarer Weise. Prinzipiell können mittels einer solchen Montagevorrichtung einzelne Beschlagelemente mit hoher Geschwindigkeit und/oder Präzision unabhängig voneinander zwischen den jeweiligen Montagestationen bewegt werden.

Für die Montage einer Beschlaganordnung, insbesondere einer Beschlaganordnung für Fenster, Türen, Möbel oder dergleichen, kann es dabei vorteilhaft sein, die allgemeine Flexibilität einer solchen Montagevorrichtung zumindest für eine Gruppe von Läufern, welche insbesondere zusammen alle für eine jeweiliger Beschlaganordnung einer bestimmten Konfigurationen erforderlichen Halterungen aufweisen, in gewisser Hinsicht einzuschränken, damit die Läufer dieser Gruppe gemeinsam, sozusagen als Einheit, das genannte Trägerelement ersetzen können.

Daher ist erfindungsgemäß ferner vorgesehen, dass für die Montage einer jeweiligen Beschlaganordnung der ersten Konfiguration die Läufer einer Gruppe von Läufern dazu angesteuert werden, sich in einer ersten relativen Anordnung zueinander anzuordnen und sich, insbesondere unter Beibehaltung der ersten relativen Anordnung, von Montagestation zu Montagestation zu bewegen, und dass für die Montage einer jeweiligen Beschlaganordnung der zweiten Konfiguration die Läufer einer anderen oder derselben Gruppe von Läufern dazu angesteuert werden, sich in einer von der ersten relativen Anordnung verschiedenen zweiten relativen Anordnung zueinander anzuordnen und sich, insbesondere unter Beibehaltung der zweiten relativen Anordnung, von Montagestation zu Montagestation zu bewegen.

Zwar könnte für die Montage einer jeweiligen Beschlaganordnung grundsätzlich auch lediglich ein einzelner Läufer genutzt werden, der entsprechend dem genannten Trägerelement Halterungen für alle für die jeweilige Beschlaganordnung erforderlichen Beschlagelemente in entsprechender Zahl und räumlichen Anordnung aufweist. Dann allerdings wäre für einen Wechsel der Konfiguration ein Umrüsten, also insbesondere Umsetzen oder Austauschen der Halterungen, wie bei dem Trägerelement erforderlich. Stattdessen wird daher eine ganze Gruppe von Läufern vorgesehen, die jeweils andere Beschlagelemente der zu montierenden Beschlaganordnung transportieren. Insbesondere kann vorgesehen sein, dass je Läufer lediglich eine oder nur wenige, etwa maximal zwei oder drei, Beschlagelemente an einer jeweiligen Halterung des Läufers angeordnet werden.

Damit die Beschlagelemente zur Montage einer Beschlaganordnung einer bestimmten Konfiguration gleichwohl, zumindest an den Montagestationen, in definierter Weise relativ zueinander angeordnet sind, werden die Läufer der jeweiligen Gruppe dazu angesteuert, eine bestimmte, insbesondere der jeweiligen Konfiguration entsprechende, relative Anordnung zueinander einzunehmen. Wenn sich die Läufer lediglich eindimensional, also zumindest im Wesentlichen lediglich in eine Richtung entlang der Laufbahn, gegebenenfalls noch in die entgegengesetzte Richtung, bewegen können, kann eine jeweilige Anordnung der Läufer dabei insbesondere durch die Abfolge der Läufer und den jeweiligen Abstand (entlang der Laufbahn) zwischen zwei aufeinanderfolgenden Läufern vollständig definiert sein.

Vorzugsweise nehmen die Läufer einer jeweiligen Gruppe die jeweilige relative Anordnung zumindest an den Montagestationen ein. Zwischen den Montagestationen kann die Anordnung dagegen grundsätzlich zumindest vorübergehend auch abweichen. Wenn Beschlagelemente, die in jeweiligen Halterungen verschiedener Läufer aufgenommen sind, bereits unmittelbar aneinander oder über ein oder mehrere weitere Beschlagelemente starr miteinander verbunden sind, kann es freilich erforderlich sein, dass zumindest diese Läufer der Gruppe von Läufern ihre jeweilige relative Anordnung beibehalten. Bevorzugt wird die relative Anordnung der Läufer innerhalb einer jeweiligen Gruppe nicht nur an einer jeweiligen Montagestation beibehalten, sondern auch beim Bewegen von Montagestation zu Montagestation.

Die relative Anordnung der Läufer mit ihren jeweiligen Halterungen kann dabei zumindest im Wesentlichen der jeweiligen Anordnung entsprechen, in der entsprechende Halterungen auch auf dem genannten Trägerelement angeordnet worden wären. Gegenüber dem Trägerelement hat aber die Gruppe von Läufern den Vorteil, dass sich die Anordnung der Halterungen für einen Wechsel von der Montage von Beschlaganordnungen der ersten Konfiguration zu einer Montage von Beschlaganordnungen der zweiten Konfiguration einfach, schnell und vollständig automatisierbar verändern lässt. Wenn im Anschluss an die Montage einer Beschlaganordnung der ersten Konfiguration die Montage einer Beschlaganordnung der zweiten Konfiguration erfolgen soll, brauchen die Läufer für einen solchen Wechsel lediglich dazu angesteuert zu werden, die für die zweite Konfiguration geeignete zweite relative Anordnung einzunehmen und anschließend wieder die Montagestationen zu durchlaufen. Ein zeitaufwändiges, insbesondere manuelles Umpositionieren von Halterungen an einem Trägerelement entfällt somit. Durch das erfindungsgemäße Verfahren kann der Wechsel von einer Konfiguration auf eine andere daher insbesondere vollständig automatisiert erfolgen. Zudem kann der Wechsel von der ersten relativen Anordnung der Läufer einer jeweiligen Gruppe zu der zweiten relativen Anordnung der Läufer (ebenso wie gegebenenfalls entsprechende Änderungen in der Ansteuerung der sonstigen Vorrichtungen an den jeweiligen Montagestationen) vorteilhafterweise zumindest im Wesentlichen verzögerungsfrei durchgeführt werden.

Grundsätzlich kann lediglich eine einzige wie vorstehend beschriebene Gruppe von Läufern vorgesehen sein, deren Läufer dann für die Montage von Beschlaganordnungen der ersten Konfigurationen dazu angesteuert werden, sich in der ersten relativen Anordnung anzuordnen und die entsprechenden Montagestationen zu durchlaufen. Wenn die Montage später auf Beschlaganordnungen der zweiten Konfiguration umgestellt wird, können dann dieselben Läufer dazu angesteuert werden, sich in die zweite relative Anordnung umzuordnen und wiederum die entsprechenden Montagestationen zu durchlaufen. Es können aber auch mehrere Gruppen vorgesehen sein, wobei die Zuordnung eines jeweiligen Läufers zu einer jeweiligen Gruppe nicht zwangsläufig, aber vorzugsweise fix ist.

Für eine Erhöhung des Durchsatzes oder eine zumindest teilweise zeitlich überlappende Montage von Beschlaganordnungen verschiedener Konfigurationen kann ferner vorgesehen sein, dass Läufer in einer so ausreichenden Zahl vorgesehen werden, dass mehrere Gruppen gebildet werden können, welche die einzelnen Montagestationen nacheinander durchlaufen. Dabei können die einzelnen Gruppen jeweils unabhängig voneinander für die Montage von Beschlaganordnungen der ersten oder der zweiten Konfiguration genutzt werden und ebenso unabhängig voneinander von der Montage von Beschlaganordnungen der ersten Konfiguration auf die Montage von Beschlaganordnungen der zweiten Konfiguration wechseln, indem die relative Anordnung der Läufer innerhalb der jeweiligen Gruppe in geeigneter Weise verändert wird. In letztgenanntem Fall nehmen also die Läufer derselben jeweiligen Gruppe zunächst die erste relative Anordnung zur Montage einer oder mehrerer Beschlaganordnungen der ersten Konfiguration und später die zweite relative Anordnung zur Montage einer oder mehrerer Beschlaganordnungen der zweiten Konfiguration ein.

Gemäß einer vorteilhaften Ausführungsform wird während der Montage einer jeweiligen Beschlaganordnung der ersten Konfiguration von den Läufern einer jeweiligen Gruppe die erste relative Anordnung beim Durchlaufen sämtlicher entlang der Laufbahn vorgesehener Montagestationen, die für die Montage der jeweiligen Beschlaganordnung zu durchlaufen sind, beibehalten, und wird während der Montage einer jeweiligen Beschlaganordnung der zweiten Konfiguration von den Läufern einer jeweiligen Gruppe die zweite relative Anordnung beim Durchlaufen sämtlicher entlang der Laufbahn vorgesehener Montagestationen, die für die Montage der jeweiligen Beschlaganordnung zu durchlaufen sind, beibehalten. Eine Änderung der relativen Anordnung der Läufer einer jeweiligen Gruppe erfolgt dann zumindest im Wesentlichen lediglich dann, wenn von einer Konfiguration auf eine andere umgestellt wird. Die Läufer einer jeweiligen Gruppe, die grundsätzlich individuell ansteuerbar sind, bewegen sich somit als eine feste Einheit, jedenfalls solange die Montage nicht auf eine Beschlaganordnung einer anderen Konfiguration umgestellt wird. Dadurch kann beispielsweise die Ansteuerung der einzelnen Läufer einer jeweiligen Gruppe vereinfacht sein.

Des Weiteren ist es bevorzugt, wenn bei einem Wechsel von der Montage von Beschlaganordnungen der ersten Konfiguration zu der Montage von Beschlaganordnungen der zweiten Konfiguration keine Veränderung der an den Läufern vorgesehenen Halterungen erfolgt. Insbesondere brauchen die jeweiligen Halterungen an den Läufern nicht neu positioniert, neu ausgerichtet und/oder ausgetauscht zu werden, was typischerweise ein manuellen Eingreifen erforderlich machen würde. Daher lässt sich der Wechsel der zu montierenden Konfiguration somit umfassender automatisieren.

Der Austausch jeweiliger Halterungen kann insbesondere dadurch vermieden werden, dass selbst dann, wenn an Beschlaganordnungen verschiedener Konfiguration zumindest teilweise unterschiedliche Beschlagelemente vorgesehen sind, für die verschiedenen Beschlagelemente unter Umständen derselbe Läufer verwendet wird. Das kann insbesondere dadurch möglich sein, dass der Läufer sowohl eine Halterung für das Beschlagelement der einen Konfiguration als auch eine Halterung für das davon verschiedene Beschlagelement der anderen Konfiguration aufweisen kann und je nach zu montierender Konfiguration entsprechend angeordnet wird.

Ferner kann vorgesehen sein, dass zwischen den Läufern einer jeweiligen Gruppe von Läufern, die für die Montage von Beschlaganordnungen einer bestimmten Konfiguration genutzt werden, weitere Läufer vorgesehen sind, die für Beschlaganordnungen dieser Konfiguration nicht benötigt werden, die aber dann benötigt werden, wenn die Gruppe auf die Montage von Beschlaganordnungen einer anderen Konfiguration umgestellt wird. Diese weiteren Läufer müssen daher auch schon vor der Umstellung vorgesehen sein, damit die Umstellung kein aufwändiges Hinzufügen weiterer Läufer an die Laufbahn erforderlich macht. Solche weiteren Läufer, die bei der Montage von Beschlaganordnungen einer bestimmten Konfiguration genutzt werden, bei der Montage von Beschlaganordnungen einer anderen Konfiguration aber nicht, brauchen während der Montage von Beschlaganordnungen dieser anderen Konfiguration nicht zwangsläufig eine definierte relative Anordnung zu den benachbarten Läufern einzunehmen und stellen dann insofern keinen Teil der für diese Konfiguration spezifisch angeordneten Gruppe von Läufern dar. Beim Wechsel auf eine Montage von Beschlaganordnungen, für die sie benötigt werden, werden sie dann entsprechend der Konfiguration der zu montierenden Beschlaganordnung relativ zu den übrigen dafür genutzten Läufern angeordnet, mit denen sie folglich insofern eine Gruppe bilden.

Gemäß einer weiteren vorteilhaften Ausführungsform umfasst das Durchlaufen einer jeweiligen Montagestation, dass sich eine Gruppe von Läufern entlang der Laufbahn zu der Montagestation bewegt, dass an der Montagestation zumindest ein Montageschritt erfolgt und dass sich die Gruppe entlang der Laufbahn von der Montagestation weg weiterbewegt. Bei der ersten und bei der letzten Montagestation kann freilich insofern eine Abweichung von dem beschriebenen Ablauf vorliegen, als die Gruppe in Rahmen der Montage einer jeweiligen Beschlaganordnung überhaupt erst an der ersten Montagestation eine Bewegung als Gruppe beginnen und diese Bewegung an der letzten Montagestation enden kann.

Der genannte zumindest eine an einer jeweiligen Montagestation erfolgende Montageschritt kann insbesondere umfassen: dass zumindest ein Beschlagelement an einem jeweiligen Läufer der Gruppe angeordnet und/oder von diesem gelöst wird; und/oder dass zumindest ein Beschlagelement an einem an einem jeweiligen Läufer der Gruppe angeordneten anderen Beschlagelement angeordnet und/oder von diesem gelöst wird; und/oder dass zumindest ein an einem jeweiligen Läufer der Gruppe angeordnetes Beschlagelement bearbeitet wird; und/oder dass zumindest zwei an einem Läufer oder jeweiligen Läufern der Gruppe angeordnete Beschlagelemente aneinander befestigt oder in anderer Weise miteinander verarbeitet werden.

Gemäß einer weiteren vorteilhaften Ausführungsform ist die Laufbahn ringförmig geschlossen. Die Läufer können dann insbesondere dazu angesteuert werden, die Laufbahn kontinuierlich mehrfach zu durchlaufen. Eine solche Ausführungsform hat den Vorteil, dass die Läufer nach Durchlaufen oder Erreichen der letzten Montagestation nicht gesondert an den Anfang der Laufbahn zurückgebracht werden müssen, etwa indem sie am Ende der Laufbahn von der Laufbahn gelöst und am Anfang der Laufbahn erneut an die Laufbahn angeordnet werden. Auch wird vermieden, dass sich die Läufer in umgekehrte Richtung entlang der Laufbahn von deren Ende zu deren Anfang bewegen müssen, so dass dadurch die Montage jeweils unterbrochen würde. Stattdessen können die Läufer bei einer ringförmig geschlossen Laufbahn nach Durchlaufen der letzten an der Laufbahn vorgesehenen Montagestation ohne Lösen oder Richtungswechsel zwangsläufig als nächstes wieder die erste Montagestation erreichen.

Die Montagestationen können dabei derart an der Laufbahn vorgesehen sein, dass ein vollständiger Umlauf einer jeweiligen Gruppe von Läufern entlang der Laufbahn der Montage genau einer Beschlaganordnung unter Nutzung dieser Gruppe entspricht. Die Länge der Laufbahn und die Anzahl der Montagestationen können aber auch derart ausgelegt sein, dass pro Umlauf zwei oder mehr Beschlaganordnungen montiert werden.

Eine Schwierigkeit, die sich bei einer ringförmig geschlossenen Laufbahn ergibt, besteht darin, dass die Laufbahn zwangsläufig keinen ausschließlich geraden Verlauf aufweisen kann. Zwar ist der Verlauf auch nicht auf eine Kreisbahn festgelegt, sondern kann insbesondere gerade verlaufende Abschnitte umfassen, allerdings muss er zumindest Biegungen aufweisen, an denen sich die Richtung des Verlaufs ändert. Eine derartige Biegung kann insbesondere insofern problematisch sein, als sie unter Umständen von einem Beschlagelement oder einem bereits montierten Teilstück der Beschlaganordnung, das nicht lediglich von einem, sondern von mehreren Läufern gehalten wird, nicht passiert werden kann, da sich das Beschlagelement bzw. das Teilstück dazu biegen lassen müsste, was typischerweise für Elemente einer Beschlaganordnung nicht der Fall ist. Die genannte Schwierigkeit ergibt sich nicht nur bei einer ringförmig geschlossenen Laufbahn, sondern grundsätzlich dann, wenn die Laufbahn eine Biegung aufweist.

Die einzelnen Läufer können eine solche Biegung dagegen vorzugsweise ohne Schwierigkeiten durchlaufen. Dabei kann insbesondere auch die relative Anordnung der Läufer einer Gruppe von Läufern trotz der Biegung zumindest insofern aufrechterhalten bleiben, als sich die Reihenfolge der Läufer und die jeweiligen Abstände zwischen den einzelnen Läufern nicht oder zumindest nicht wesentlich verändern.

Gemäß einer weiteren vorteilhaften Ausführungsform umfasst die Laufbahn zumindest einen gerade verlaufenden ersten Abschnitt mit einer ersten Montagestation und einen gerade verlaufenden zweiten Abschnitt mit einer zweiten Montagestation, zwischen denen die Laufbahn eine Biegung aufweist, wobei das Verfahren umfasst, dass an der ersten Montagestation von einem jeweiligen Läufer einer ersten Gruppe von Läufern ein Beschlagelement oder eine Anordnung von Beschlagelementen gelöst wird und dass das Beschlagelement oder die Anordnung von Beschlagelementen an der zweiten Montagestation an demselben jeweiligen Läufer der ersten Gruppe oder einem bezüglich seiner relativen Anordnung innerhalb der Gruppe entsprechenden Läufer einer von der ersten Gruppe verschiedenen zweiten Gruppe von Läufern angeordnet wird.

Die Bezeichnung der genannten Montagestationen als erste bzw. als zweite Montagestation dient im Rahmen dieser Ausführungsform lediglich der begrifflichen Unterscheidung einer jeweiligen vor der Biegung vorgesehenen Montagestation und einer jeweiligen nach der Biegung vorgesehenen Montagestation, ohne dass dadurch diese erste und diese zweite Montagestation darauf eingeschränkt wären, im Ablauf der für die Montage einer jeweiligen Beschlaganordnung zu durchlaufenden Montagestation an erster bzw. an zweiter Stelle zu stehen. Ferner muss es sich bei der ersten und der zweiten Montagestation nicht zwingend um die beiden der Biegung beiderseits jeweils am nächsten liegenden Montagestationen handeln.

Da die erste und die zweite Montagestation aber in unterschiedlichen, zumindest durch die eine Biegung getrennten Abschnitten der Laufbahn vorgesehen sind, kann die Biegung durch das Lösen des Beschlagelements oder der Anordnung von Beschlagelementen an der ersten Montagestation und das erneute Anordnen an der zweiten Montagestation sozusagen überbrückt werden. Der Transport des Beschlagelements bzw. der Anordnung von Beschlagelementen von der ersten zu der zweiten Montagestation kann beispielsweise mittels eines Roboterarms erfolgen. Das auf diese Weise die Biegung überbrückende Beschlagelement bzw. die Anordnung von Beschlagelementen ist vor dem Lösen insbesondere an mehr als lediglich einem Läufer angeordnet und wird an der ersten Montagestation von diesen mehreren Läufern gelöst und an der zweiten Montagestation an diesen oder entsprechenden Läufern wieder angeordnet. Gerade für ein derartiges von mehreren Läufern zu haltendes Beschlagelement oder eine derartige Anordnung von Beschlagelementen wird durch die beschriebene Überbrückung der jeweiligen Biegung die vorstehend beschriebene Schwierigkeit, dass die Biegung ansonsten unter Umständen nicht passiert werden könnte, gelöst.

Das vor der Biegung gelöste Beschlagelement bzw. die Anordnung von Beschlagelementen muss nach der Biegung nicht zwangsläufig wieder an dieselben Läufer angeordnet werden, an denen es bzw. sie zuvor angeordnet war. Vielmehr kann vorgesehen sein, dass das Beschlagelement bzw. die Anordnung von Beschlagelementen an Läufern einer voranlaufenden Gruppe von Läufern angeordnet wird, wobei es bzw. sie dann vorteilhafterweise an denjenigen Läufern der voranlaufenden Gruppe angeordnet wird, die bezüglich ihrer Anordnung innerhalb der Gruppe denjenigen Läufern entsprechen, von denen das Beschlagelement bzw. die Anordnung von Beschlagelementen gelöst worden ist. Auf diese Weise braucht für das erneute Anordnen des Beschlagelements bzw. der Anordnung von Beschlagelementen nicht abgewartet zu werden, bis die Läufer, von denen das Beschlagelement bzw. die Anordnung von Beschlagelementen gelöst wurde, die Biegung vollzogen und die zweite Montagestation erreicht haben. Sondern es kann eine direkte Übertragung des Beschlagelements bzw. der Anordnung von Beschlagelementen von den Läufern an der ersten Montagestation auf Läufer an der zweiten Montagestation erfolgen. Entlang der Laufbahn können dabei zwischen der ersten und der zweiten Montagestation weitere Montagestationen vorgesehen sein, bei denen folglich vorzugsweise Montageschritte erfolgen, welche das die Biegung überbrückende Beschlagelement bzw. die Anordnung von Beschlagelementen nicht betreffen.

Alternativ oder zusätzlich zu der Möglichkeit, eine Biegung in der Laufbahn auf die beschriebene Weise zu überbrücken, ist es ferner vorteilhaft, wenn die zumindest eine Halterung beweglich an dem jeweiligen Läufer gelagert ist. Dabei kann die Beweglichkeit der Halterung insbesondere darauf beschränkt sein, dass die Halterung zumindest begrenzt, also etwa über einen Winkelbereich von zumindest etwa 10°, vorzugsweise zumindest etwa 30°, drehbar ist. Die Drehachse einer solchen Drehbarkeit ist dabei bevorzugt senkrecht zu einer Ebene ausgerichtet, in der die Laufbahn oder zumindest die zu passierende Biegung der Laufbahn verläuft. Ein Beschlagelement, das an zwei Halterungen unterschiedlicher Läufer angeordnet ist, kann dann unter Umständen auch dann die Biegung durchlaufen, wenn es selbst nicht biegbar oder gelenkig ist, da es die Biegung zwischen den zwei Läufern sozusagen schneiden kann. Dies wird durch die Beweglichkeit der Halterungen erreicht, die sich beim Durchlaufen der Biegung kontinuierlich in Richtung der jeweils anderen Halterung ausrichten können, so dass sich das Beschlagelement stets von einem Läufer zum anderen erstrecken und somit von beiden die Biegung durchlaufenden Läufern gehalten werden kann, ohne dabei selbst gebogen zu werden.

Die erfindungsgemäße Montagevorrichtung, welche ebenfalls die eingangs genannte Aufgabe löst, ist zur Montage von Beschlaganordnungen zumindest einer ersten und einer davon verschiedenen zweiten Konfiguration insbesondere dadurch ausgebildet, dass sie eine Laufbahn, eine Steuervorrichtung und mehrere an der Laufbahn beweglich angeordnete Läufer umfasst, die jeweils zumindest eine Halterung zur vorübergehenden Anordnung eines oder mehrerer jeweiliger Beschlagelemente aufweisen und von der Steuervorrichtung individuell zu einer Bewegung entlang der Laufbahn ansteuerbar sind, um mehrere entlang der Laufbahn vorgesehene Montagestationen zu durchlaufen. Dabei ist die Steuervorrichtung dazu angepasst, die Läufer entsprechend einem Verfahren, wie es vorstehend beschrieben wird, anzusteuern. Eine derartig ausgebildete Montagevorrichtung weist dann die Vorteile des jeweiligen Verfahrens in entsprechender Weise auf.

Gemäß einer bevorzugten Weiterbildung der Montagevorrichtung weisen die Läufer für die Bewegung entlang der Laufbahn einen Antrieb nach Art eines Linearmotors auf. Dabei kann für mehrere Läufer, z.B. für die Läufer einer jeweiligen Gruppe von Läufern, insbesondere aber für alle Läufer der Montagevorrichtung, ein gemeinsamer Antrieb vorgesehen sein. Die Läufer können aber auch jeweils einen eigenen Antrieb aufweisen. Der linearmotorische Antrieb beruht dabei insbesondere auf einer gesteuert veränderlichen magnetischen Wechselwirkung zwischen dem jeweiligen Läufer und der Laufbahn. Dabei kann der Antrieb beispielsweise als Linearsynchronmotor (LSM) oder als Linearinduktionsmotor (LIM) ausgebildet sein. Derartige Antriebe ermöglichen hohe Geschwindigkeiten sowie eine besonders hohe Positionsgenauigkeit der Läufer.

Die Erfindung wird nachfolgend lediglich beispielhaft unter Bezugnahme auf die Zeichnungen näher erläutert.
- Fig. 1 und 2: zeigen in schematischer Darstellung jeweils eine Beschlaganordnung, die sich untereinander hinsichtlich ihrer Länge und der Anordnung der jeweiligen Beschlagelemente unterscheiden.
- Fig. 3 und 4: zeigen in schematischer Darstellung jeweils eine Montagevorrichtung während der Montage mehrerer Beschlaganordnungen, wobei zwischen den Fig. 3 und 4 ein Wechsel von der Montage von Beschlaganordnungen einer ersten Konfiguration auf die Montagen von Beschlaganordnungen der zweiten Konfiguration erfolgt.
- Fig. 5: zeigt in schematischer Darstellung einen Teil einer Montagevorrichtung mit gebogener Laufbahn.

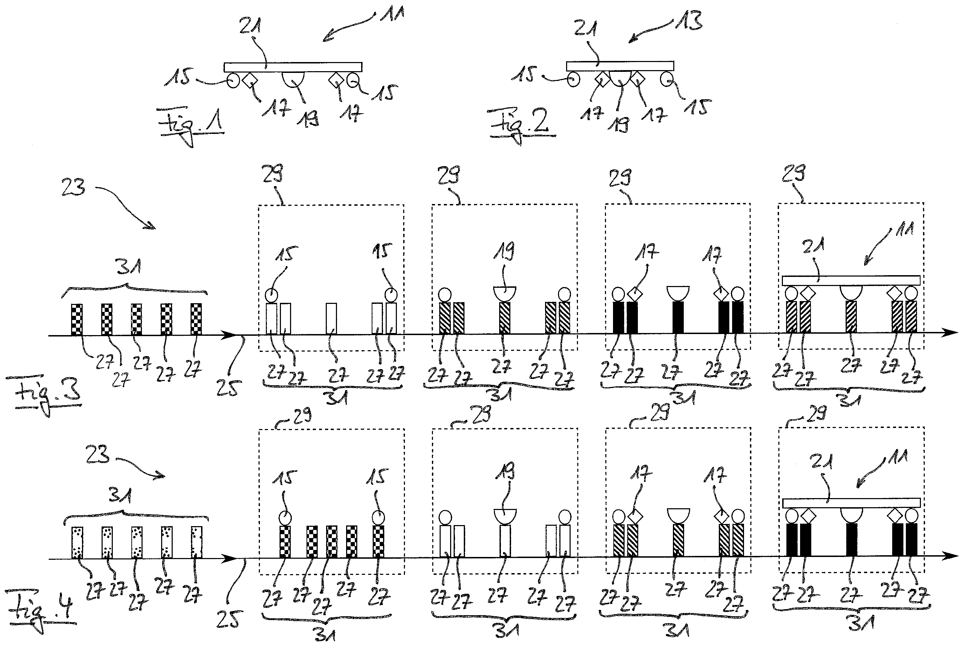

Die in Fig. 1 dargestellte Beschlaganordnung 11 weist eine erste Konfiguration auf, während die in Fig. 2 dargestellte Beschlaganordnung 13 eine zweite Konfiguration aufweist. Die Beschlaganordnungen 11 und 13 sind dabei stark vereinfacht darstellt. Einzelne Beschlagelemente sind als Kreise und Rauten, die beispielsweise Zapfen 15 bzw. Stifte 17 der jeweiligen Beschlaganordnung 11 bzw. 13 symbolisieren, als Halbkreise, die ein jeweiliges Getriebe 19 der jeweiligen Beschlaganordnung 11 bzw. 13 symbolisieren, und längliche Rechtecke, die eine jeweilige Stange oder Schiene 21 der jeweiligen Beschlaganordnung 11 bzw. 13 symbolisieren. Ein möglicherweise bestehender funktionaler Zusammenhang zwischen den jeweiligen Beschlagelementen 15, 17, 19, 21 soll durch die vereinfachte schematische Darstellung in den Fig. 1 und 2 nicht illustriert werden. Es ist zu erkennen, dass sich die erste und die zweite Konfiguration insbesondere hinsichtlich der jeweiligen Länge der Beschlaganordnung 11 bzw. 13 sowie der jeweiligen Anordnung der Beschlagelemente 15, 17, 19, 21 unterscheiden.

Die Fig. 3 und 4 zeigen exemplarisch in schematischer Darstellung eine Montagevorrichtung 23, die eine lediglich als Linie dargestellte Laufbahn 25 umfasst, an der Läufer 27 beweglich angeordnet sind. Die Läufer 27 sind individuell mittels einer nicht dargestellten Steuervorrichtung zu einer Bewegung entlang der Laufbahn 25 ansteuerbar. Der Antrieb erfolgt dabei nach Art eines Linearmotors. Entlang der Laufbahn 25 sind vier Montagestationen 29 vorgesehen, an denen jeweils unterschiedliche Montageschritte zur Montage einer jeweiligen Beschlaganordnung 11 bzw. 13 der ersten oder der zweiten Konfiguration durchgeführt werden.

Jeder Läufer 27 weist an seinem oberen Ende zumindest eine Halterung (nicht gesondert dargestellt) auf, über die ein jeweiliges Beschlagelement 15, 17, 19, 21 an dem Läufer 27 angeordnet werden kann. Auf diese Weise können die Läufer an verschiedenen Montagestationen 29 mit jeweiligen Beschlagelementen 15, 17, 19, 21 bestückt werden, die dabei auch bearbeitet und untereinander verbunden werden können, bis nach Durchlaufen der Montagestationen 29 die jeweilige Beschlaganordnung 11 bzw. 13 fertig montiert ist. Jeweils fünf aufeinanderfolgende Läufer 27 bilden eine jeweilige Gruppe 31 von Läufern 27, die die vier Montagestationen 29 gemeinsam durchlaufen. Die verschiedenen Gruppen 31 sind in Fig. 3 und 4 durch unterschiedliche Musterungen der Läufer 27 gekennzeichnet. Von den an den Läufern 27 vorgesehenen jeweiligen Halterungen abgesehen, sind die Läufer 27 auch über die Gruppen 31 hinweg zumindest im Wesentlichen identisch zueinander ausgebildet.

Die Montagestationen 29 werden in den Fig. 3 und 4 von links nach rechts durchlaufen (vgl. Pfeile). Als jeweiliger exemplarischer Montageschritt ist dabei vorgesehen, dass an der ersten Montagestation 29 (links) an zwei Läufern 27 jeweilige Zapfen 15 angeordnet werden, an der nachfolgenden zweiten Montagestation 29 an einem anderen Läufer 27 ein Getriebe 19 angeordnet wird, an der nachfolgenden dritten Montagestation 29 an zwei wiederum anderen Läufern 27 jeweilige Stifte 17 angeordnet werden und an der nachfolgenden vierten Montagestation 29 (rechts) eine Schiene 21 an den genannten Beschlagelementen 15, 17, 19, 21 angeordnet und mit diesen verbunden wird.

In den Fig. 3 und 4 sind zwei unterschiedliche Zeitpunkte einer fortlaufenden Montage von Beschlagelementen 11 bzw. 13 gezeigt. In Fig. 3 sind die Läufer 27 der vier Gruppen 31 von Läufern 27, die sich gerade an einer jeweiligen Montagestation 29 befinden, jeweils in derselben ersten relativen Anordnung zueinander angeordnet. Diese erste relative Anordnung der Läufer 27 nehmen die Läufer 27 vor oder mit Erreichen der ersten Montagestation 29 ein und behalten sie anschließend innerhalb der jeweiligen Gruppe 31 während des gesamten Durchlaufens der Laufbahn 25 bei. Dies wird insbesondere im Vergleich mit der Fig. 4 deutlich, wo der Zeitpunkt dargestellt ist, an dem jede der genannten Gruppen 31 gerade eine Montagestation 29 weiter vorangeschritten ist (wobei die in Fig. 3 rechteste Gruppe 31 in Fig. 4 nicht mehr gezeigt ist). So können an jeder Montagestation 29 weitere Beschlagelemente 15, 17, 19, 21 an die Läufer 27 bzw. an daran zuvor bereits angeordnete Beschlagelemente 15, 17, 19, 21 angeordnet und gegebenenfalls in geeigneter Weise bearbeitet und verbunden werden, bis an der letzten Montagestation 29 die fertige Beschlaganordnung 11 bzw. 13 vorliegt.

Die Läufer 27, die sich in der Fig. 3 noch vor der ersten Montagestation 29 (ganz links) befinden, haben noch keine der für die erste oder die zweite Konfiguration spezifische erste bzw. zweite relative Anordnung zueinander eingenommen. Diese Gruppe 31 von Läufern 27 soll anders als die voranlaufenden Gruppen 31 für die Montage einer Beschlaganordnung 13 der zweiten Konfiguration genutzt werden. Zwischen der unmittelbar vorangehenden Gruppe 31 (ungemustert) und dieser Gruppe 31 (mit Schachbrettmuster) findet also ein Wechsel der Konfiguration statt.

Dazu werden die Läufer 27 dieser Gruppe 31 wie in Fig. 4 gezeigt vor oder spätestens an der ersten Montagestation 29 dazu angesteuert, sich in der zweiten relativen Anordnung zueinander anzuordnen. Diese zweite relative Anordnung behalten die Läufer 27 dieser Gruppe 31 dann beim Durchlaufen der weiteren Montagestationen 29 bei. Da das Anordnen der Läufer 27 in der zweiten relativen Anordnung gegenüber einem Anordnen der Läufer 27 in der ersten relativen Anordnung keinen zusätzlichen zeitlichen oder sonstigen Aufwand erfordert, kann die Umstellung von der Montage von Beschlaganordnungen 11 der ersten Konfiguration auf Beschlaganordnungen13 der zweiten Konfiguration zumindest im Wesentlichen verzögerungsfrei erfolgen.

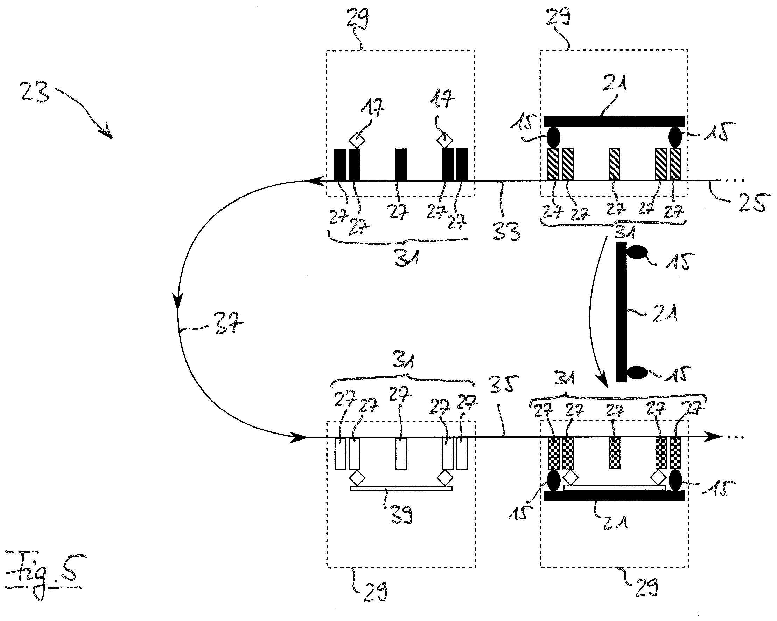

Die Fig. 5 zeigt einen Teil einer Montagevorrichtung 23, deren Laufbahn 25 einen ersten geraden Abschnitt 33, einen sich zumindest im Wesentlichen parallel zum ersten geraden Abschnitt 33 erstreckenden zweiten geraden Abschnitt 35 sowie eine die beiden geraden Abschnitte 33, 35 verbindende Biegung 37 aufweist. Die an der Laufbahn 23 angeordneten Läufer 27 durchlaufen die Montagevorrichtung in der schematischen Darstellung im Gegenuhrzeigersinn (vgl. Pfeile), wobei jeweils fünf Läufer 27 zu einer jeweiligen Gruppe 31 zusammengefasst sind. Innerhalb einer jeweiligen Gruppe 31 nehmen die Läufer 27 eine bestimmte relative Anordnung zueinander ein, die für die jeweilige zu montierende Beschlaganordnung 23 spezifisch ist und beim Durchlaufen der entlang der Laufbahn 25 vorgesehenen Montagestationen 29 beibehalten wird.

In Fig. 5 sind vier Montagestationen 29 gezeigt. Von diesen Montagestationen 29 wird die in Fig. 5 rechts oben dargestellte als erstes durchlaufen. Zuvor haben die Läufer 27 aber bereits eine oder mehrere andere nicht dargestellte Montagestationen 29 durchlaufen. An der ersten gezeigten Montagestation 29 sind an den Läufern 27 der jeweiligen Gruppe 31 von Läufern bereits zwei Zapfen 15 sowie eine mit den Zapfen 15 verbundene Schiene 21 angeordnet. Da die Schiene 21 bezüglich ihrer Längserstreckung zumindest im Wesentlichen starr ist, kann die Anordnung aus der Schiene 21 und den Zapfen 15 die Biegung 37 nicht passieren. Daher ist vorgesehen, dass diese Anordnung an der ersten Montagestation 29 von den Läufern 27 der jeweiligen Gruppe 31 gelöst wird und unmittelbar auf Läufer 27 einer vorangehenden Gruppe 31 übertragen wird, die sich bereits an der im Verlauf der Laufbahn 25 letzten der vier gezeigten Montagestationen 29 befinden.

Diese an der letzten Montagestation 29 befindlichen Läufer 27 haben zuvor auch die drei vorangehenden Montagestationen 29 durchlaufen. Es war also auch an diesen Läufern 27 bereits eine entsprechende Anordnung aus einer Schiene 21 und zwei Zapfen 15 angeordnet, die dann an der ersten Montagestation 29 von den Läufern 27 gelöst und auf eine andere Gruppe 31 von Läufern 27 an der letzten Montagestation 29 übertragen wurde. Anschließend sind die Läufer 27 ohne diese Anordnung weiter zur nächsten an dem ersten geraden Abschnitt 33 vorgesehenen Montagestation 29 gelangt, wo an zwei der Läufer 27 ein jeweiliger Stift 17 angeordnet wurde. Da die Stifte 17 zu diesem Zeitpunkt noch unverbunden sind, konnten die Läufer 27 mit den Stiften 17 die Biegung 37 passieren. Dabei konnten die Läufer 27 ihre gezeigte relative Anordnung auch in der Biegung 37 zumindest im Wesentlichen beibehalten.

Anschließend haben die Läufer 27 die erste Montagestation 29 des zweiten geraden Abschnitts 35 der Laufbahn 25 erreicht, wo eine Stange 39 an die Stifte 17 angeordnet und mit den Stiften 17 verbunden wurde. An der letzten der vier gezeigten Montagestationen 29 wird dann die an der ersten Montagestation 29 gelöste Anordnung aus Schiene 21 und Stiften 15, die die Biegung 37 nicht passieren kann, an diese Läufer 27 der drei Gruppen 31 voranlaufenden Gruppe 31 wieder angeordnet. Im weiteren Verlauf der Laufbahn 25 können sich dann noch weitere Montagestationen 29 bzw. -schritte anschließen, bis die jeweilige Beschlaganordnung 11, 13 fertig montiert ist.

### Bezuqszeichen

- 11: Beschlaganordnung der ersten Konfiguration
- 13: Beschlaganordnung der zweiten Konfiguration
- 15: Zapfen
- 17: Stift
- 19: Getriebe
- 21: Schiene
- 23: Montagevorrichtung
- 25: Laufbahn
- 27: Läufer
- 29: Montagestation
- 31: Gruppe von Läufern
- 33: erster gerade Abschnitt
- 35: zweiter gerader Abschnitt
- 37: Biegung
- 39: Stange

## Patentansprüche

1. Verfahren zur Montage von Beschlaganordnungen (11, 13), insbesondere von Beschlaganordnungen (11, 13) für Fenster, Türen, Möbel oder dergleichen, wobei Beschlaganordnungen (11, 13) zumindest einer ersten und einer davon verschiedenen zweiten Konfiguration montiert werden,
unter Verwendung einer Montagevorrichtung (23), die eine Laufbahn (25) und mehrere an der Laufbahn (25) beweglich angeordnete Läufer (27) umfasst, die jeweils zumindest eine Halterung zur vorübergehenden Anordnung eines oder mehrerer jeweiliger Beschlagelemente (15, 17, 19, 21, 39) aufweisen und individuell zu einer Bewegung entlang der Laufbahn (25) ansteuerbar sind, um mehrere entlang der Laufbahn (25) vorgesehene Montagestationen (29) zu durchlaufen,
**dadurch gekennzeichnet,**
**dass** für die Montage einer jeweiligen Beschlaganordnung (11) der ersten Konfiguration die Läufer (27) einer Gruppe (31) von Läufern (27) dazu angesteuert werden, sich in einer ersten relativen Anordnung zueinander anzuordnen und sich, insbesondere unter Beibehaltung der ersten relativen Anordnung, von Montagestation (29) zu Montagestation (29) zu bewegen, und dass für die Montage einer jeweiligen Beschlaganordnung (13) der zweiten Konfiguration die Läufer (27) einer, insbesondere derselben, Gruppe (31) von Läufern (27) dazu angesteuert werden, sich in einer von der ersten relativen Anordnung verschiedenen zweiten relativen Anordnung zueinander anzuordnen und sich, insbesondere unter Beibehaltung der zweiten relativen Anordnung, von Montagestation (29) zu Montagestation (29) zu bewegen.

2. Verfahren nach Anspruch 1,
wobei während der Montage einer jeweiligen Beschlaganordnung (11) der ersten Konfiguration die erste relative Anordnung der Läufer (27) beim Durchlaufen sämtlicher entlang der Laufbahn (25) vorgesehener Montagestationen (29), die für die Montage der Beschlaganordnung (11) zu durchlaufen sind, beibehalten wird
und wobei während der Montage einer jeweiligen Beschlaganordnung (13) der zweiten Konfiguration die zweite relative Anordnung der Läufer (27) beim Durchlaufen sämtlicher entlang der Laufbahn (25) vorgesehener Montagestationen (29), die für die Montage der jeweiligen Beschlaganordnung (13) zu durchlaufen sind, beibehalten wird.

3. Verfahren nach Anspruch 1 oder 2,
wobei bei einem Wechsel von der Montage von Beschlaganordnungen (11) der ersten Konfiguration zu der Montage von Beschlaganordnungen (13) der zweiten Konfiguration keine Veränderung der an den Läufern (27) vorgesehenen Halterungen erfolgt.

4. Verfahren nach zumindest einem der vorstehenden Ansprüche,
wobei das Durchlaufen einer jeweiligen Montagestation (29) umfasst, dass sich eine Gruppe (31) von Läufern (27) entlang der Laufbahn (25) zu der Montagestation (29) bewegt, dass an der Montagestation (29) zumindest ein Montageschritt erfolgt und dass sich die Gruppe (31) entlang der Laufbahn (25) von der Montagestation (29) weg weiterbewegt,
wobei der Montageschritt insbesondere umfasst:
dass zumindest ein Beschlagelement (15, 17, 19, 21, 39) an einem jeweiligen Läufer (29) der Gruppe (31) angeordnet und/oder von diesem gelöst wird;
und/oder dass zumindest ein Beschlagelement (15, 17, 19, 21, 39) an einem an einem jeweiligen Läufer (27) der Gruppe (31) angeordneten anderen Beschlagelement (15, 17, 19, 21, 39) angeordnet und/oder von diesem gelöst wird;
und/oder dass zumindest ein an einem jeweiligen Läufer (27) der Gruppe (31) angeordnetes Beschlagelement (15, 17, 19, 21, 39) bearbeitet wird;
und/oder dass zumindest zwei an einem oder jeweiligen Läufern (27) der Gruppe (31) angeordnete Beschlagelemente (15, 17, 19, 21, 39) aneinander befestigt oder in anderer Weise miteinander verarbeitet werden.

5. Verfahren nach zumindest einem der vorstehenden Ansprüche,
wobei die Laufbahn (25) ringförmig geschlossen ist und die Läufer (27) dazu angesteuert werden, die Laufbahn (25) kontinuierlich mehrfach zu durchlaufen.

6. Verfahren nach zumindest einem der vorstehenden Ansprüche,
wobei die Laufbahn (25) zumindest einen gerade verlaufenden ersten Abschnitt (33) mit einer ersten Montagestation (29) und einen gerade verlaufenden zweiten Abschnitt (35) mit einer zweiten Montagestation (29) umfasst, zwischen denen die Laufbahn (25) eine Biegung (37) aufweist, und wobei das Verfahren umfasst, dass an der ersten Montagestation (29) von einem jeweiligen Läufer (27) einer ersten Gruppe (31) von Läufern (27) ein Beschlagelement (15, 17, 19, 21, 39) oder eine Anordnung von Beschlagelementen (15, 17, 19, 21, 39) gelöst wird und dass das Beschlagelement (15, 17, 19, 21, 39) oder die Anordnung von Beschlagelementen (15, 17, 19, 21, 39) an der zweiten Montagestation (29) an demselben jeweiligen Läufer (27) der ersten Gruppe (31) oder einem entsprechenden Läufer (27) einer von der ersten Gruppe (31) verschiedenen zweiten Gruppe (31) von Läufern (27) angeordnet wird.

7. Verfahren nach zumindest einem der vorstehenden Ansprüche,
wobei die zumindest eine Halterung beweglich, insbesondere zumindest begrenzt drehbar, vorzugsweise um eine zu einer Ebene, in der die Laufbahn (25) oder zumindest eine Biegung (37) der Laufbahn (25) verläuft, senkrechte Drehachse drehbar, an dem jeweiligen Läufer (27) gelagert ist.

8. Montagevorrichtung (23) zur Montage von Beschlaganordnungen (11, 13), insbesondere von Beschlaganordnungen (11, 13) für Fenster, Türen, Möbel oder dergleichen, wobei die Montagevorrichtung (23) zur Montage von Beschlaganordnungen (11, 13) zumindest einer ersten und einer davon verschiedenen zweiten Konfiguration ausgebildet ist,
wobei die Montagevorrichtung (23) eine Laufbahn (25), eine Steuervorrichtung und mehrere an der Laufbahn (25) beweglich angeordnete Läufer (27) umfasst, die jeweils zumindest eine Halterung zur vorübergehenden Anordnung eines oder mehrerer jeweiliger Beschlagelemente (15, 17, 19, 21, 39) aufweisen und von der Steuervorrichtung individuell zu einer Bewegung entlang der Laufbahn (25) ansteuerbar sind, um mehrere entlang der Laufbahn (25) vorgesehene Montagestationen (29) zu durchlaufen,
**dadurch gekennzeichnet,**
**dass** die Steuervorrichtung dazu angepasst ist, die Läufer (27) entsprechend einem Verfahren nach zumindest einem der vorstehenden Ansprüche anzusteuern.

9. Montagevorrichtung nach Anspruch 8,
wobei die Läufer (27) für die Bewegung entlang der Laufbahn (25) einen Antrieb nach Art eines Linearmotors aufweisen.

## Claims

1. A method of assembling fitting arrangements (11, 13), in particular fitting arrangements (11, 13) for windows, doors, furniture or the like, wherein fitting arrangements (11, 13) of at least a first configuration and a second configuration different therefrom are assembled,
using an assembly apparatus (23) which comprises a track (25) and a plurality of runners (27) which are movably arranged at the track (25) and which each have least one holder for temporarily arranging one or more respective fitting elements (15, 17, 19, 21, 39) and which can be individually controlled to make a movement along the track (25) in order to run through a plurality of assembly stations (29) provided along the track (25), **characterized in that**,
for the assembly of a respective fitting arrangement (11) of the first configuration, the runners (27) of a group (31) of runners (27) are controlled to arrange themselves in a first relative arrangement with respect to one another and to move, in particular while maintaining the first relative arrangement, from assembly station (29) to assembly station (29);
and **in that**, for the assembly of a respective fitting arrangement (13) of the second configuration, the runners (27) of one group (31), in particular the same group (31), of runners (27) are controlled to arrange themselves in a second relative arrangement with respect to one another that is different from the first relative arrangement and to move, in particular while maintaining the second relative arrangement, from assembly station (29) to assembly station (29).

2. A method in accordance with claim 1,
wherein, during the assembly of a respective fitting arrangement (11) of the first configuration, the first relative arrangement of the runners (27) is maintained on the running through of all the assembly stations (29) which are provided along the track (25) and which are to be run through for the assembly of the fitting arrangement (11);
and wherein, during the assembly of a respective fitting arrangement (13) of the second configuration, the second relative arrangement of the runners (27) is maintained on the running through of all the assembly stations (29) which are provided along the track (25) and which are to be run through for the assembly of the respective fitting arrangement (13).

3. A method in accordance with claim 1 or claim 2,
wherein, on a change from the assembly of fitting arrangements (11) of the first configuration to the assembly of fitting arrangements (13) of the second configuration, no change in the holders provided at the runners (27) takes place.

4. A method in accordance with at least one of the preceding claims,
wherein the running through of a respective assembly station (29) comprises a group (31) of runners (27) moving along the track (25) to the assembly station (29); at least one assembly step taking place at the assembly station (29); and the group (31) moving further along the track (25) away from the assembly station (29),
wherein the assembly step in particular comprises:
at least one fitting element (15, 17, 19, 21, 39) being arranged at a respective runner (29) of the group (31) and/or being released therefrom;
and/or at least one fitting element (15, 17, 19, 21, 39) being arranged at another fitting element (15, 17, 19, 21, 39), which is arranged at a respective runner (27) of the group (31), and/or being released therefrom;
and/or at least one fitting element (15, 17, 19, 21, 39) arranged at a respective runner (27) of the group (31) being processed;
and/or at least two fitting elements (15, 17, 19, 21, 39) arranged at one or respective runners (27) of the group (31) being fastened to one another or being processed with one another in a different manner.

5. A method in accordance with at least one of the preceding claims,
wherein the track (25) is closed in annular form and the runners (27) are controlled to continuously run through the track (25) a multiple of times.

6. A method in accordance with at least one of the preceding claims,
wherein the track (25) comprises at least one first section (33), which extends in a straight line and has a first assembly station (29), and one second section (35), which extends in a straight line and has a second assembly station (29), between which sections the track (25) has a bend (37);
and wherein the method comprises a fitting element (15, 17, 19, 21, 39) or an arrangement of fitting elements (15, 17, 19, 21, 39) being released at the first assembly station (29) from a respective runner (27) of a first group (31) of runners (27) and the fitting element (15, 17, 19, 21, 39) or the arrangement of fitting elements (15, 17, 19, 21, 39) being arranged at the second assembly station (29) at the same respective runner (27) of the first group (31) or at a corresponding runner (27) of a second group (31) of runners (27) different from the first group (31).

7. A method in accordance with at least one of the preceding claims,
wherein the at least one holder is movably supported at the respective runner (27), in particular rotatably at least to a limited extent, preferably rotatably about an axis of rotation perpendicular to a plane in which the track (25) or at least one bend (37) of the track (25) extends.

8. An assembly apparatus (23) for assembling fitting arrangements (11, 13), in particular fitting arrangements (11, 13) for windows, doors, furniture or the like, wherein the assembly apparatus (23) is configured for assembling fitting arrangements (11, 13) of at least a first configuration and a second configuration different therefrom,
wherein the assembly apparatus (23) comprises a track (25); a control apparatus; and a plurality of runners (27) which are movably arranged at the track (25), which each have least one holder for temporarily arranging one or more respective fitting elements (15, 17, 19, 21, 39) and which can be individually controlled by the control apparatus to make a movement along the track (25) in order to run through a plurality of assembly stations (29) provided along the track (25),
**characterized in that**
the control apparatus is adapted to control the runners (27) in accordance with a method in accordance with at least one of the preceding claims.

9. An assembly apparatus in accordance with claim 8,
wherein the runners (27) have a drive in the manner of a linear motor for the movement along the track (25).

## Revendications

1. Procédé de montage d'ensembles de ferrure (11, 13), en particulier d'ensembles de ferrure (11, 13) pour fenêtres, portes, meubles ou similaires, dans lequel
on monte des ensembles de ferrure (11, 13) d'au moins une première configuration et d'une seconde configuration différente de la première, en utilisant un dispositif de montage (23) qui comprend une voie de déplacement (25) et plusieurs curseurs (27) disposés de manière mobile sur la voie de déplacement (25) et comprenant chacun au moins un élément de maintien pour positionner temporairement un ou plusieurs éléments de ferrure respectifs (15, 17, 19, 21, 39) et pouvant être commandés individuellement pour se déplacer le long de la voie de déplacement (25), afin de passer par plusieurs postes de montage (29) prévus le long de la voie de déplacement (25),
**caractérisé en ce que**
pour le montage d'un ensemble de ferrure respectif (11) de la première configuration, les curseurs (27) d'un groupe (31) de curseurs (27) sont commandés pour se positionner dans une première disposition relative les uns par rapport aux autres et pour se déplacer d'un poste de montage (29) à un autre poste de montage (29), en particulier en conservant la première disposition relative, et **en ce que**
pour le montage d'un ensemble de ferrure respectif (13) de la seconde configuration, les curseurs (27) d'un groupe (31) de curseurs (27), en particulier du même groupe, sont commandés pour se positionner dans une seconde disposition relative, différente de la première disposition relative, les uns par rapport aux autres et pour se déplacer d'un poste de montage (29) à un autre poste de montage (29), en particulier en conservant la seconde disposition relative.

2. Procédé selon la revendication 1,
dans lequel
pendant le montage d'un ensemble de ferrure respectif (11) de la première configuration, la première disposition relative des curseurs (27) est maintenue lorsqu'ils passent par tous les postes de montage (29) qui sont prévus le long de la voie de déplacement (25) et qui doivent être traversés pour le montage de l'ensemble de ferrure (11), et
pendant le montage d'un ensemble de ferrure respectif (13) de la seconde configuration, la seconde disposition relative des curseurs (27) est maintenue lorsqu'ils passent par tous les postes de montage (29) qui sont prévus le long de la voie de déplacement (25) et qui doivent être traversés pour le montage de l'ensemble de ferrure respectif (13).

3. Procédé selon la revendication 1 ou 2,
dans lequel
lors du changement pour passer du montage d'ensembles de ferrure (11) de la première configuration au montage d'ensembles de ferrure (13) de la seconde configuration, aucune modification n'est apportée aux éléments de maintien prévus sur les curseurs (27).

4. Procédé selon l'une au moins des revendications précédentes, dans lequel
le passage par un poste de montage respectif (29) comprend le déplacement d'un groupe (31) de curseurs (27) le long de la voie de déplacement (25) jusqu'au poste de montage (29), l'exécution d'au moins une étape de montage au poste de montage (29), et le déplacement du groupe (31) le long de la voie de déplacement (25) en éloignement du poste de montage (29),
l'étape de montage consistant en particulier à :
positionner au moins un élément de ferrure (15, 17, 19, 21, 39) sur un curseur respectif (27) du groupe (31), et/ou à le détacher de celui-ci ;
et/ou à positionner au moins un élément de ferrure (15, 17, 19, 21, 39) sur un autre élément de ferrure (15, 17, 19, 21, 39) disposé sur un curseur respectif (27) du groupe (31), et/ou à le détacher de celui-ci ;
et/ou à traiter au moins un élément de ferrure (15, 17, 19, 21, 39) disposé sur un curseur respectif (27) du groupe (31) ;
et/ou à fixer mutuellement au moins deux éléments de ferrure (15, 17, 19, 21, 39) disposés sur un ou plusieurs curseurs respectifs (27) du groupe (31), ou à les traiter conjointement d'une autre manière.

5. Procédé selon l'une au moins des revendications précédentes, dans lequel
la voie de déplacement (25) est fermée en forme annulaire et les curseurs (27) sont commandés pour passer plusieurs fois en continu par la voie de déplacement (25).

6. Procédé selon l'une au moins des revendications précédentes, dans lequel
la voie de déplacement (25) comprend au moins une première portion droite (33) avec un premier poste de montage (29) et une seconde portion droite (35) avec un second poste de montage (29), entre lesquelles la voie de déplacement (25) présente une courbure (37), et
le procédé consiste à détacher un élément de ferrure (15, 17, 19, 21, 39) ou un ensemble d'éléments de ferrure (15, 17, 19, 21, 39) depuis un curseur respectif (27) d'un premier groupe (31) de curseurs (27) au premier poste de montage (29), et à positionner l'élément de ferrure (15, 17, 19, 21, 39) ou l'ensemble d'éléments de ferrure (15, 17, 19, 21, 39) sur le même curseur respectif (27) du premier groupe (31) ou sur un curseur correspondant (27) d'un second groupe (31) de curseurs (27) différent du premier groupe (31), au second poste de montage (29).

7. Procédé selon l'une au moins des revendications précédentes,
dans lequel
ledit au moins un élément de maintien est monté sur le curseur respectif (27) de façon mobile, en particulier de manière à pouvoir tourner au moins de façon limitée, de préférence autour d'un axe de rotation perpendiculaire à un plan dans lequel s'étend la voie de déplacement (25) ou au moins une courbure (37) de la voie de déplacement (25).

8. Dispositif de montage (23) pour monter des ensembles de ferrure (11, 13), en particulier des ensembles de ferrure (11, 13) pour fenêtres, portes, meubles ou similaires, le dispositif de montage (23) étant réalisé pour monter des ensembles de ferrure (11, 13) d'au moins une première configuration et d'une seconde configuration différente de la première,
dans lequel
le dispositif de montage (23) comprend une voie de déplacement (25), un dispositif de commande et plusieurs curseurs (27) disposés de façon mobile sur la voie de déplacement (25) et comprenant chacun au moins un élément de maintien pour positionner temporairement un ou plusieurs éléments de ferrure respectifs (15, 17, 19, 21, 39) et pouvant être commandés individuellement par le dispositif de commande pour se déplacer le long de la voie de déplacement (25), afin de passer par plusieurs postes de montage (29) prévus le long de la voie de déplacement (25),
**caractérisé en ce que**
le dispositif de commande est adapté à commander les curseurs (27) par un procédé selon l'une au moins des revendications précédentes.

9. Dispositif de montage selon la revendication 8,
dans lequel
les curseurs (27) comprennent un entraînement de type moteur linéaire pour le déplacement le long de la voie de déplacement (25).
